# EUROPEAN PATENT APPLICATION

(11) **EP 4 793 766 A1**
(43) Date of publication of application: **19.08.2026**
(21) Application number: 24876242.9
(22) Date of filing: 13.08.2024
(51) Int. Cl.: G06F 9/445

(54) **MEDIA RESOURCE PRELOADING METHOD AND APPARATUS, ELECTRONIC DEVICE, AND MEDIUM**

(30) Priority: 13.10.2023 CN 202311332615
(71) Applicant: Beijing Zitiao Network Technology Co., Ltd., Beijing 100190 (CN)
(72) Inventor: CHEN, Shuyao, Beijing 100028 (CN); LI, Sikuan, Beijing 100028 (CN)
(74) Representative: Grünecker Patent- und Rechtsanwälte PartG mbB
(86) International application number: PCT/CN2024/111900
(87) International publication number: WO 2025/077422

(57) **Abstract**

Embodiments of the present disclosure provide a method and apparatus, electronic device and medium for preloading media resource. The method for preloading media resource includes: obtaining a media content set; obtaining, in response to the media content set including target media content and the preloading condition of the target media content being satisfied, a configuration file of the target media content, wherein the target media content includes a common media resource and a media resource to be loaded; determining loading information of the media resource to be loaded based on the configuration file; and preloading the media resource to be loaded based on the loading information. A preloading problem of information source with non-fixed content is solved, the target media content is included in the media content set, and in response to the preloading condition of the target media content being satisfied, preloading of the media resource to be loaded is implemented through the configuration file, preloading of the information source with the non-fixed content and a preloading operation before displaying target media content are implemented, and the page rendering performance is improved.

## Description

This application claims the benefit of Chinese Patent Application No. 202311332615.X, entitled "METHOD, APPARATUS, ELECTRONIC DEVICE, AND MEDIUM FOR PRELOADING MEDIA RESOURCE" filed Oct. 13, 2023, the entire content of which is incorporated herein by reference.

### FIELD

Embodiments of the present disclosure relate to the field of computer technologies, and in particular, to a method, an apparatus, an electronic device, and medium for preloading media resource.

### BACKGROUND

With development of Internet technologies, the types of applications on electronic devices are increased accordingly. Applications generally have a visual interactive interface through which users can realize browse of content. Various types of content presented by the interactive interface include information sources with fixed content and information sources with non-fixed content. The information sources with non-fixed content may have varied contents.

In the prior art, only the information sources with fixed content determined in a compiling period can be preloaded, but the information sources with non-fixed content cannot be preloaded, which thus eliminates the page rendering performance.

### SUMMARY

The present disclosure provides a method, an apparatus, an electronic device and a medium, to improve the page rendering performance.

According to a first aspect, embodiments of the present disclosure provide method for preloading a media resource, including: obtaining a media content set comprising a plurality of media contents; obtaining, in response to the media content set comprising target media content and a preloading condition of the target media content being satisfied, a configuration file of the target media content, where the target media content comprises a common media resource and a media resource to be loaded; determining loading information of the media resource to be loaded based on the configuration file; and preloading the media resource to be loaded based on the loading information.

According to a second aspect, embodiments of the present disclosure further provide an apparatus for preloading media resource, comprising: a first obtaining module configured to obtain a media content set, comprising a plurality of media contents; a second obtaining module configured to obtain, in response to the media content set comprising target media content and a preloading condition of the target media content being satisfied, a configuration file of the target media content, where the target media content includes a common media resource and a media resource to be loaded; a determining module configured to determine loading information of the media resource to be loaded based on the configuration file; and a preloading module configured to preload the media resource to be loaded based on the loading information.

In a third aspect, embodiments of the present disclosure further provide an electronic device, comprising: one or more processing devices; and a storage device configured to store one or more programs, where the one or more programs, when executed by the one or more processing devices, causing the one or more processing devices to implement the method for preloading a media resource according to the embodiments of the present disclosure.

According to a fourth aspect, embodiments of the present disclosure further provide a storage medium comprising computer executable instructions that, when executed by a computer processor, are configured to perform the method for preloading a media resource according to embodiments of the present disclosure.

### BRIEF DESCRIPTION OF DRAWINGS

The above and other features, advantages, and aspects of various embodiments of the present disclosure will become more apparent from the following detailed description taken in conjunction with drawings. Throughout the drawings, the same or similar reference numbers refer to the same or similar elements. It should be understood that the drawings are schematic, and elements and elements are not necessarily drawn to scale.
FIG. 1 is a schematic flowchart of a method for preloading a media resource provided by an embodiment of the present disclosure;
FIG. 2 is a schematic diagram of a system architecture provided by an embodiment of the present disclosure;;
FIG. 3 is a schematic diagram of a target media content preview provided by an embodiment of the present disclosure;
FIG. 4 is a schematic flowchart of a method for preloading a media resource provided by an embodiment of the present disclosure;
FIG. 5 is a schematic flowchart of preloading runtime resource provided by an embodiment of the present disclosure;
FIG. 6 is a schematic diagram of loading a template resource provided by an embodiment of the present disclosure;
FIG. 7 is a schematic diagram of loading a picture resource provided by an embodiment of the present disclosure;
FIG. 8 is a schematic diagram of loading a master template and a dynamic component resource provided by an embodiment of the present disclosure;
FIG. 9 is a flowchart of a special-shaped card display solution provided by an embodiment of the present disclosure;
FIG. 10 is a schematic structural diagram of an apparatus for preloading a media resource provided by an embodiment of the present disclosure; and
FIG. 11 is a schematic structural diagram of an electronic device provided by an embodiment of the present disclosure.

### DETAILED DESCRIPTION

Embodiments of the present disclosure will be described in more detail below with reference to drawings. While certain embodiments of the present disclosure are shown in the drawings, it is to be understood that the present disclosure may be implemented in various forms, and should not be construed as limited to the embodiments set forth herein, and vice versa. It should be understood that the drawings and embodiments of the present disclosure are for exemplary purposes only and are not intended to limit a scope of the present disclosure.

It should be understood that the steps recited in method embodiments of the present disclosure may be performed in different orders, and/or in parallel. Further, the method embodiments may include additional steps and/or omit performing the illustrated steps. The scope of the present disclosure is not limited in this respect.

As used herein, the term "include" and variations thereof are open-ended, i.e., "including but not limited to". The term "based on" is "based at least in part on". The term "an embodiment" means "at least one embodiment"; the term "a further embodiment" means "at least one further embodiment"; the term "some embodiments" means "at least some embodiments". The relevant definitions of other terms will be given below.

It should be noted that concepts such as "first" and "second" mentioned in the present disclosure are merely used to distinguish different apparatuses, modules, or units, and are not intended to limit an order of functions performed by the apparatuses, modules, or units or the mutual dependency relationship.

It should be noted that the modification of "a" and "a plurality" mentioned in the present disclosure is illustrative and not limiting, and those skilled in the art should understand that "one or more" should be understood unless context clearly indicates otherwise.

Names of messages or information exchanged between multiple apparatuses in embodiments of the present disclosure are for illustrative purposes only and are not intended to limit a scope of such messages or information.

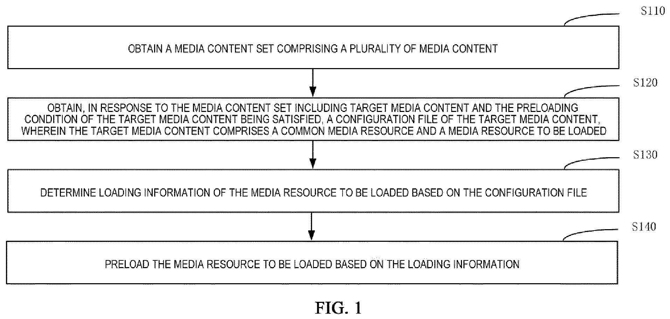

FIG. 1 is a schematic flowchart of a method for preloading a media resource provided by an embodiment of the present disclosure.

As shown in FIG. 1, the method comprises the following steps.

S110: a media content set is obtained, which comprises a plurality of media contents.

A media content set may be considered a set of information formed from multiple media contents. The media content set may be an information source provided to a user for browsing. The media content may be an information source presented to the user, and the media content may be content in a multimedia form, such as a video, an image-text, and a special-shaped card. The special-shaped card may be content presented in a form of a card. The special-shaped card may include a content presentation area and an operation area, and the content presentation area may present content provided by a content provider. The operation area may include a negative feedback control and an operation control. The negative feedback control may be considered as a control for feeding back uninteresting willingness. The operation control may be a control for implementing an operation on the special-shaped card, for example, a control for increasing a volume and a control for fast forward.

The video may be a short video, for example, a video with a playing duration less than a set duration. The special-shaped card is different from the short video, each video of the short video is a fixed message source, and the special-shaped card is a special-shaped card which dynamically loads different forms of different services based on the same base. Special-shaped cards in the same form have different contents, and the special-shaped cards are varied, which are resources that cannot be determined by the compiler and may be determined when running. That is, the special-shaped card may have multiple forms and dynamic content. The present disclosure ensures flexibility of customized content in the special-shaped card while reusing common capability of the base. The base may be considered as common content in the special-shaped card, and a subprogram is invoked on the basis of the base to implement acquisition and rendering of the customized content.

In an embodiment, the base common capability may include capability to affect and switch a page, for example, capability of sliding the page up and down to implement switching of the special-shaped card.

The operation may obtain the media content set from the server. The plurality of media contents in the media content set are media content to be displayed to the user.

For the special-shaped card implementing a listening function, a strategy issued from a server to a client may be: after set time, in the media content set requested by the client from the server for the *n-th* time, the *m-th* content may be a special-shaped card with audio and video related to sleep assisting. When the issued strategy is satisfied, the media content set issued by the server to the client includes the special-shaped card implementing the listening function, where *m* and *n* are positive integers.

S120: in response to the media content set comprising target media content and a preloading condition of the target media content being satisfied, a configuration file of the target media content is obtained, where the target media content comprises a common media resource and a media resource to be loaded.

The target media content may be considered media content with customized content. The common media resource may be a common media resource for all or a part of users. A loading opportunity of the common media resource is not limited, and may be prioritized over a loading opportunity of a page for displaying the target media content.

The media resource to be loaded may be a media resource customized for the user, for example, a resource and a dynamic component displayed on a first screen. The dynamic components may be a customized media resource for different services. The media resource may be a resource displayed on the media content, such as a control, a picture, a video, or other data.

The preloading condition may be a condition for preloading the target media content, and the preloading condition is not limited herein, as long as the target media content is preloaded before the electronic device displays the target media content. For example, the preloading condition may be that, when the *x-th* media content in the *n-th* requested media content set is currently displayed, the media content set is traversed to determine whether a special-shaped card exists, and if yes, the preloading condition may be considered as being satisfied, where *x* is a positive integer less than *m*.

For example, the server may include a special-shaped card related to sleep aid in a media content set requested by the client for the second time after 21: 00. The special-shaped card may be located at the sixth position in the media content set. When the first media content in the media content set is displayed, the media content set may be traversed to determine whether the special-shaped card is included, and if yes, a view may be pre-created, and a configuration file is acquired to preload the target media content.

The configuration file may be a file configured with information associated with the media resource to be loaded in the target media content. According to a mode of the special-shaped card, that is, a schema parses and reads the configuration file, and a special-shaped card base, a dynamic component, a video, an audio, a picture and other resources are preloaded according to the configuration file. The dynamic component may be a dynamically loaded component, such as a component customized by a service party.

S130: loading information of the media resource to be loaded is determined based on the configuration file.

The loading information may be considered as information required for loading the media resource to be loaded, for example, an address of the media resource to be loaded, a loading mode of the media resource to be loaded, and a storage address after loading is obtained.

The configuration file may be a file configured by a service party of the special-shaped card.

The configuration file may store the loading information, and after determining that the media resource is to be loaded, the loading information of the media resource to be loaded may be obtained from the configuration file.

There may be multiple configuration items in the configuration file, which may correspond to different media resources to be loaded, and when determining the loading information, this operation may traverse all the configuration items, and determine loading information of a respective configuration item.

S140, the media resource to be loaded based on the loading information is preloaded.

After determining the loading information, this operation may implement the loading of the media resource to be loaded based on the loading information. For example, the media resource to be loaded is loaded according to the corresponding loading mode from a path of obtaining the media resource to be loaded.

This operation achieves the preloading before the target media content is displayed, and page rendering can be more quickly implemented in the display occasion of the target media content, thereby improving the rendering efficiency of the target media content.

According to the technical solution of embodiments of the present disclosure, the media content set comprising a plurality of media contents is obtained; in response to the media content set comprising target media content and the preloading condition of the target media content being satisfied, the configuration file of the target media content is obtained, where the target media content comprises the common media resource and the media resource to be loaded; the loading information of the media resource to be loaded is determined based on the configuration file; the media resource to be loaded is preloaded based on the loading information. The above solve the preloading problem of an information source with non-fixed content. If the target media content is included in the media content set, and the preloading condition of the target media content is satisfied, the preloading of the media resource to be loaded is implemented through the configuration file, preloading of the information source with non-fixed content is implemented, the preloading operation is performed before the display of the target media content, and the page rendering performance is improved.

Based on the above embodiments, variant embodiments of the above embodiments are provided, and it should be noted that, to simplify the description, only the differences from the above embodiments are described in the variant embodiments.

In an embodiment, the loading information includes a preloading mode and resource link data, and determining loading information of the media resource to be loaded based on the configuration file comprises: traversing items to be processed in the configuration file, to determine a preloading path and a preloading mode corresponding to the items to be processed; and determining resource link data corresponding to the preloading path.

An item to be processed may be considered as a configuration item to be processed in the configuration file. The preloading mode may be considered as a manner of preloading, and different media resources to be loaded may correspond to different loading modes.

The preloading path may be considered as a path of the media resource to be loaded. The resource link data may be a link for implementing the preloading of the media resource to be loaded. There may be a correspondence between the preloading path and the resource link data, and in this embodiment, resource link data corresponding to the preloading path may be searched from a database. The database may be transmitted by the server to the client. Timing of transmission is not limited and may be included in or transmitted in synchronization with the corresponding media content set. The corresponding media content set may be a media content set that includes the target media content.

This embodiment traverses each item to be processed in the configuration file to determine the preloading mode and the preloading path of each item to be processed. After the preloading path is determined, the resource link data corresponding to the preloading path is determined.

In an embodiment, in response to the media content set comprising the target media content and the preloading condition of the target media content being satisfied, the method further comprises: pre-creating a view of the target media content through a local service layer, where the view is configured to visualize the target media content.

The local service layer is also referred to as a native layer, and provides a software layer for a local service. This embodiment may create, in response to the preloading condition being satisfied, a view of the target media content through the local service layer, and may be associate the view with the target media content after switching to the target media content, to visualize the target media content.

This embodiment implements pre-creation of the view, and further improves the rendering efficiency of the target media content.

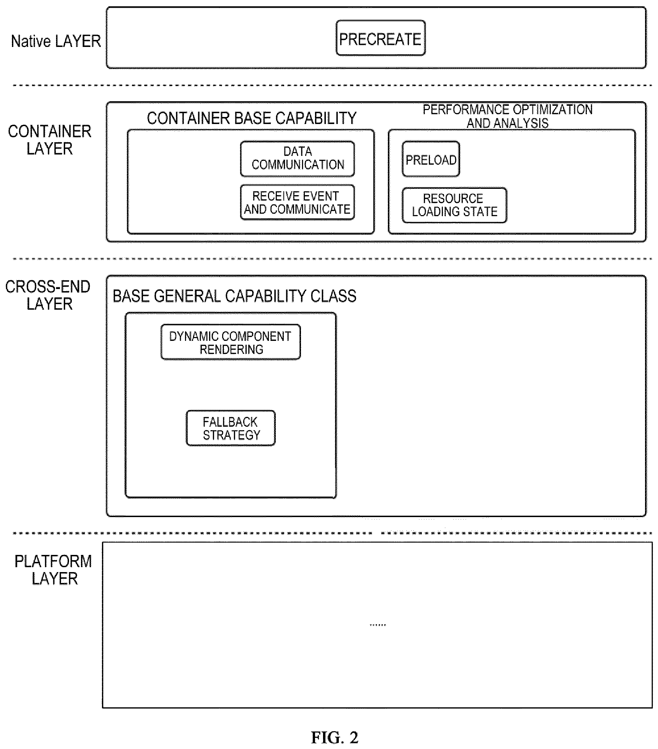

FIG. 2 is a schematic diagram of a system architecture provided by an embodiment of the present disclosure, referring to FIG. 2, the system architecture may include a native layer, a container layer, a cross-end layer and a platform layer. This embodiment implements pre-creation of a view through the native layer, that is, pre-creates a view of target media content through a local service layer, where the view is configured to visualize the target media content.

In an embodiment, after preloading the media resource to be loaded based on the loading information, the method further comprises: displaying a target page comprising the target media content; receiving an operation event for the target media content through a container layer; and responding to the operation event.

The container layer may be considered as a network layer associated with a container in a network architecture. The operation event may be considered as an event to operate the target media content. For example, a click event is performed on a control in the target media content.

The target page may be a page that displays the target media content. After displaying the target media content, this embodiment may receive the operation event of the target media content through the container layer. A manner of responding to the operation event is not limited, and different operation events correspond to different response means. For example, page adjustment is implemented, volume adjustment is implemented, etc.

As shown in FIG. 2, a container base capability and performance optimization and analysis reused by respective services may be implemented through the container layer, which are common capabilities of the base. The container base capability includes a capability of data communication and a capability of even reception and communication, such as a capability to receive an operation event in the target page, and a capability to slide on the target page to switch a displayed content.

The performance optimization and analysis implement functions such as preloading and a resource loading state. The preloading may be a function of implementing preloading of the loading information of the media resource to be loaded. The resource loading state includes a function of determining a resource loading state and reporting the resource loading state, such as a loading state of the loading information.

The cross-end layer is a layer which can cross the ends . The cross-end layer has a base common capability class, which is a common capability of the base. The base common capability class implements dynamic component rendering and a fallback strategy. The platform layer may provide an efficiency tool with debugging preview and event simulation.

The dynamic component rendering may be rendering the media resource to be loaded. The fallback strategy checks a loading condition of the page resource in advance, and if loading of a core content of the page fails, it proceeds to deleting the special-shaped card, and a distribution state is not counted so that it may be distributed to the client next time. The core content may be a preset content, which is not limited herein.

Through the system architecture diagram shown in FIG. 2, the present disclosure implements the management and control and supports the service party to flexibly customize personalized content in the special-shaped card, for example, the media resource to be loaded that is preloaded via the configuration file.

In an embodiment, after preloading the media resource to be loaded based on the loading information, the method further comprises: in response to a failure in loading a preset media resource in the media resource to be loaded, deleting the target media content from the media content set; and in response to a success in loading the preset media resource, triggering a loading success event of the media resource to be loaded.

The preset media resource may be considered as a preset media resource, which may be the core content in the target media content. In response to a failure in loading the preset media resource, the target media content may be deleted to avoid displaying the inefficient target media content, that is, the special-shaped card may be deleted.

In response to a success in loading the preset media resource, a loading success event of the media resource may be triggered, where the loading success event of the media resource indicates that the media resource loading succeeds, and the target media content may be displayed.

For example, the loading success event of the media resource indicates that the service core content, such as the preset media resource, has been loaded, and the target media content may be displayed.

This embodiment may be determine, according to a priority of the media content, an occasion for triggering the loading success event of the media resource. If the target media content strongly depends on an image, the loading success event of the media resource may be triggered after the loading of the image is completed. If there is no object with strong dependency, the loading success event of the media resource may be triggered after it is determined that the data is not abnormal, and a loading state may be reported after the triggering.

A form of the media content to be loaded is not limited, for example, may be a base, an image, a video, a text, a dynamic component, an audio/video, an external js file, an arbitrary file, a dynamic image resource, etc. By means of preloading, the single-time resource loading time consumption is reduced, and the hit rate of the resources is improved.

In an embodiment, the common media resource includes a negative feedback control, and the operation event includes a click event of the negative feedback control.

The click event may be an event that clicks the negative feedback control. The negative feedback control may be a common media resource. After clicking the negative feedback control to close the special-shaped card, information about a successful operation may be popped up. When the negative feedback is submitted to the server, the special-shaped card may also be flushed out of a screen. After clicking the negative feedback control, the special-shaped card or special-shaped cards of the same type may not be displayed for *y* days.

The common media resource may be a main frame base. A backend of the main frame base may uniformly manage the negative feedback logic, so that negative feedback of multiple users may be uniformly managed, to issue different special-shaped cards. The main frame base may also collect a click event of the negative feedback control, and support an event that the service side dynamically expands the negative feedback.

In an embodiment, receiving the operation event for the target media content through the container layer includes: receiving an operation event for a negative feedback control and/or an operation control in the target media content through the container layer, where a redirect address, a display style, and a display state corresponding to the operation control are custom items of the operation control.

The redirect address may be considered as an address that is redirected to after the operation control is clicked. The display style may be considered as a style displayed by the operation control. The display state may be considered as a state which displays whether a control is displayed or not, and the display state includes displaying and hiding. The custom items may be items that may be customized by a service party.

The operation control may have two configuration modes, including a default operation control and a custom operation control.

A default operation control may detect a click event through code instrumenting, support configuring a style of a control (the control may only support redirecting, without being limited to any protocols), support configuring of a control style, a custom click event, and hiding an operation control, and the like.

In order to avoid repeatedly reporting the click event, the custom operation control may support reporting of the code instrumenting by the service party to implement detection of the click event.

In an embodiment, the method for preloading a media resource further comprises: scanning a preview pattern that is generated by a server based on a media resource associated with the target media content; and previewing the target media content.

The preview pattern may be considered as a pre-pattern of the target media content, and the preview of the target media content may be provided by scanning the preview pattern.

The preview pattern may be a pattern presented in a set encoding mode, such as a two-dimensional code.

The preview pattern may be generated by the server based on a media resource included in the target media content. An electronic device may implement the preview of the target media content by scanning the preview pattern.

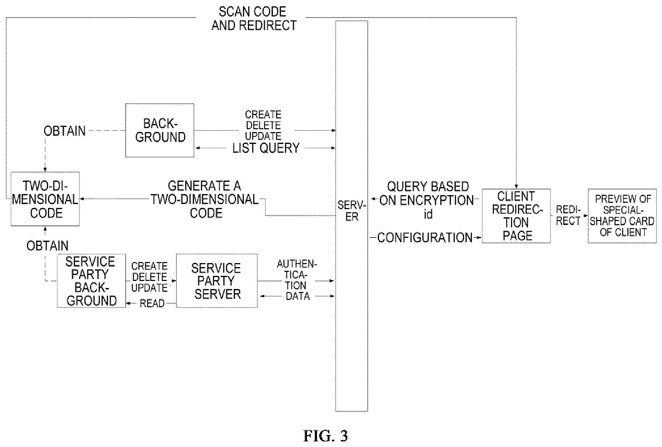

FIG. 3 is a schematic diagram of a preview of a target media content provided by an embodiment of the present disclosure. Referring to FIG. 3, a backend of an electronic device displaying the special-shaped card may configure a media resource associated with the special-shaped card and transmit it to the server of the electronic device. The backend may interact a media resource with the server by means of creating, updating and deleting, and the server may query the media resource from the backend by means of list query. After obtaining the media resource, the server may authenticate a service party server, and may transmit data, such as the media resource, to the service party server after the authentication passes, and the service party server may interact with the backend of the service party in terms of the media resource by means of creating, retrieving, updating and deleting.

A link parsed from the previewed two-dimensional code may be encrypted to improve security. For example, the two-dimensional code is generated by obtaining a parameter of a client encrypted ID. A generation device of the two-dimensional code is not limited herein. The client implements the preview of the special-shaped card by scanning the two-dimensional code. The server may configure a client redirection page, and the redirection page (i.e., a redirected page) may query the server based on the encrypted ID.

The server and the backend support a configuration item of creating, retrieving, updating and deleting, and display a configuration item list. The backend generates a two-dimensional code of the client redirection page according to configuration and environment. After scanning the code and entering the client redirection page, the environment is determined according to the parameter on schema, and a complete configuration of the special-shaped card is inquired according to the ID. After the complete configuration is obtained, the special-shaped card is concatenated to redirect to the preview. When authenticating the service party server, the service party server with the authentication may be included into a white list based on white list authentication.

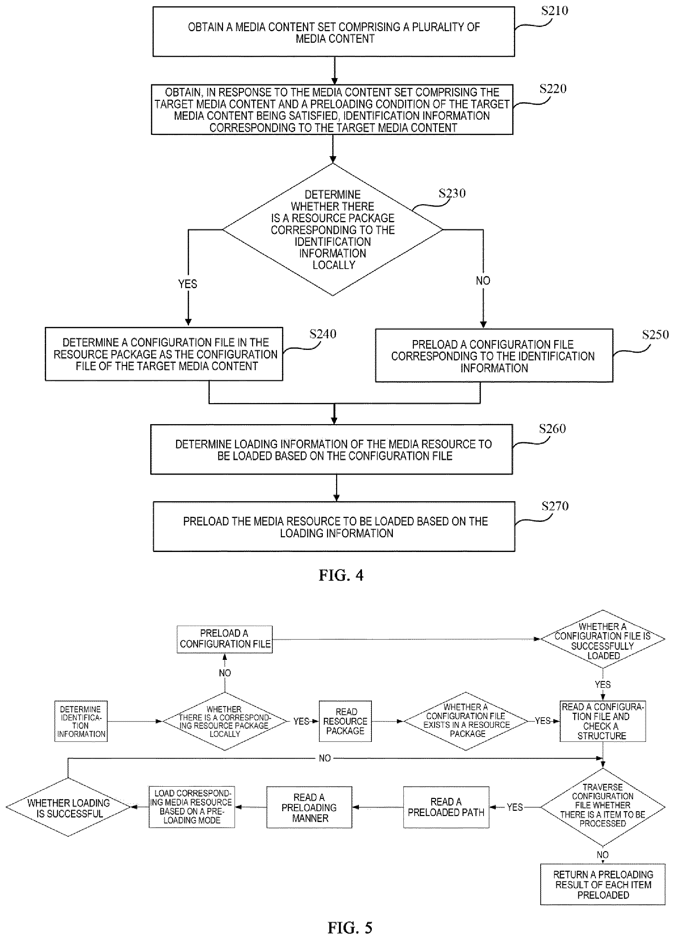

FIG. 4 is a schematic flowchart of a media resource preloading method provided by an embodiment of the present disclosure.

S210: a media content set comprising a plurality of media contents is obtained.

S220: in response to the media content set comprising the target media content and a preloading condition of the target media content being satisfied, identification information corresponding to the target media content is obtained.

The identification information may be considered as information identifying the target media content, and the identification information is not limited herein. The identification information may be included in the media content set.

S230: whether there is a resource package corresponding to the identification information locally is determined; if there is a resource package locally, S240 is performed; if there is no resource package locally, S250 is performed.

After determining the identification information, this embodiment may perform searching locally based on the identification information, to determine whether there is a resource package corresponding to the identification information locally in the electronic device. The resource package may be a data package corresponding to the target media content. In response to the target media content being displayed, the resource package will be stored locally. This embodiment may first determine whether the resource package is locally stored; if the resource package is locally stored, the configuration file is obtained based on the resource package; and if the resource package is not locally stored, the configuration file is preloaded.

S240: a configuration file in the resource package as the configuration file of the target media content is determined.

If there is a resource package locally, a configuration file in the resource package may be used as the configuration file of the target media content. Using the local configuration file can improve the speed of obtaining the configuration file.

S250, a configuration file corresponding to the identification information is preloaded.

If there is no resource package locally, this operation may preload the configuration file corresponding to the identification information, and parse the configuration file to preload the media resource.

S260: loading information of the media resource to be loaded is determined based on the configuration file.

S270, the media resource to be loaded is preloaded based on the loading information.

FIG. 5 is a schematic flowchart of a pre-load runtime resource provided by an embodiment of the present disclosure. Referring to FIG. 5, first, identification information is determined, for example, the identification information (such as a channel and a bundle) are parsed according to schema, to locate the special-shaped card. Then it is determined whether there is a resource package locally, such as a gecko package. If there is the gecko package, the resource package is read to search for whether there is a configuration file in the gecko package; and the configuration file is read to check whether a data structure satisfies expectation, to verify the structure. Then, each preloaded item is traversed, that is, to traverse whether there is an unprocessed item to be processed. If there is no an unprocessed item to be processed, a preloading result of each preloaded item is returned. If there is an unprocessed item to be processed, a preloading path is read, and resource link data corresponding to the preloading path is obtained from a database. A preloading mode is read. When reading the preloading mode, the preloading mode may be searched according to the category field read from the configuration file. Then the corresponding resource link data is loaded according to the preloading mode. Finally, it is determined whether the loading is completed, and if the loading is not completed, it returns to continue traversing the configuration file.

If there is no resource package locally, the configuration file and the resources required for rendering the target media content are preloaded. Then it is determined whether the configuration file is successfully loaded. If the configuration file is successfully loaded, the configuration file is read and the structure is checked, and then subsequent operations are performed.

A loading state and callback may be recorded and reported at points of the operation that the configuration file has not been successfully loaded and the operation of determining whether the loading is successful.

If the category field is a dynamic component, schema may be constructed according to the link of the dynamic component, and the complete process may be repeated recursively. The category field is another resource which may reuse the resource preloading mode.

This embodiment refines the operation of obtaining the configuration file, improves the efficiency of obtaining the configuration file, and further improve the page rendering efficiency.

An example of the present disclosure is described below, and the method for preloading a media resource provided by the present disclosure may be considered as a design solution for a special-shaped card in a scenario of a media content set. This embodiment is decoupled from the framework shown in FIG. 2, and supports separately maintaining dynamic components of special-shaped cards of different services in different warehouses.

In terms of performance, preloading of a runtime resource is implemented. A resource can be preloaded in response to the content being dynamic, which will not waste the network overhead when the resource is executed, but will accelerate the rendering effect, and reduce the time required for displaying a target page. From a bandwidth cost perspective, depending on the special-shaped cards with different forms and different distribution strategies, only a user who is about to see a special-shaped card during runtime can download the resource package of the special-shaped card, which achieves fine-grained on-demand loading.

A template in a fixed form is prevented from being issued from a special-shaped card form, and each service iterates a set of templates, to allow high code coupling. It may avoid developing multiple templates according to different forms, and thus may avoid a low reuse degree and a high development cost. A resource that can be determined only by a compiler can be prevented from being preloaded, and the runtime resource cannot be preloaded. It can also avoid the resource waste in the cases where an instruction for downloading the resource package of the special-shaped card is issued to all users of the application program from a bandwidth perspective to ensure the first-screen rendering performance of a page, and then most of the users download the resource package, but will not use the special-shaped cards.

The present disclosure solves the requirement that a main frame base needs to control all forms of special-shaped cards and reuse common components, and meanwhile achieves convenience of different service party access and flexibility of content expansion. A balance problem that the cost of full-data pushing offline package is higher than that of page performance is solved. Since the distribution strategies of the special-shaped cards with different forms of different services and the users are different, if the cards are not fully pushed, it fails to guarantee the page loading performance; and if the cards are fully pushed, the bandwidth cost is high. The solution provided by the present disclosure is controllable in cost and ensures that the user has downloaded an offline package before viewing the special-shaped card. A problem of reducing the labor cost of debugging link during the development process of the special-shaped card. The distribution strategy of the special-shaped card is complex, and there are a lot of front operations to be performed for displaying the special-shaped card in actual links, and the links of the special-shaped card in different forms are completely different. The present disclosure solve the problem of how to quickly preview and debug when developing card content. The following problems are also solved: a safety audit link is missed and the distribution link of the special-shaped card is complex, so an auditor needs to audit the special-shaped card, but opening the special-shaped card in a corresponding form basically cannot be simulated for a person who is not a researcher and developer (this is why a whole link lacks a stage of auditing). A stability problem is solved, to ensure the probability that the card content is effectively readable when the user sees the special-shaped card reaches 100%.

In order to solve a problem that the main frame base needs to control all forms of special-shaped cards and when managing update of a component, each special-shaped card does not need to be released to be updated, instead, once the base is updated, the update is applied to all the special-shaped cards. The present disclosure designs an architecture of the main frame base and a service dynamic component, as shown in FIG. 2. Customization of the special-shaped card is implemented in a form of a dynamic component that is dynamically loaded. In order to solve the balance problem of page performance and high cost of offline package full-data pushing, a pre-created view and a preloading method of the runtime resource are designed. In order to solve the problem of lacking a security audit link and solve the problem of labor cost in a development process of the special-shaped card, a debugging preview tool is designed for the stage of research and development, which generates a two-dimensional code for direct scanning and preview after data of a special-shaped card base template is configured on the platform. The auditor may also scan on the code on the platform to open a simulated page which includes content consistent with an actual special-shaped card for auditing. In order to solve the stability problem, a communication mechanism between the client and the service dynamic component is designed, and when content loading of the special-shaped card base or core content of the service dynamic component is timeout or the loading is abnormal, a front end notifies the client to delete the special-shaped card from the media content set, and the user is not aware of a redirecting process of deleting the card.

Through the cross-end scene base and the dynamic component architecture, the management and control performance of the base can be guaranteed, flexibility of a service side dynamic component is reserved, and good transverse expansibility is achieved by the present disclosure. The framework decouples the main frame base from the service side dynamic component, and the development cost and communication cost are reduced. The bandwidth cost is greatly reduced, real-time on-demand loading is implemented, and only the user, who is about to see the special-shaped card, downloads the offline package. An important link of security auditing is supplemented. The special-shaped card effectively displays 100%, and an average success rate of loading the special-shaped card is 99.93%, where 0.07% fails to be attributed to a network problem.

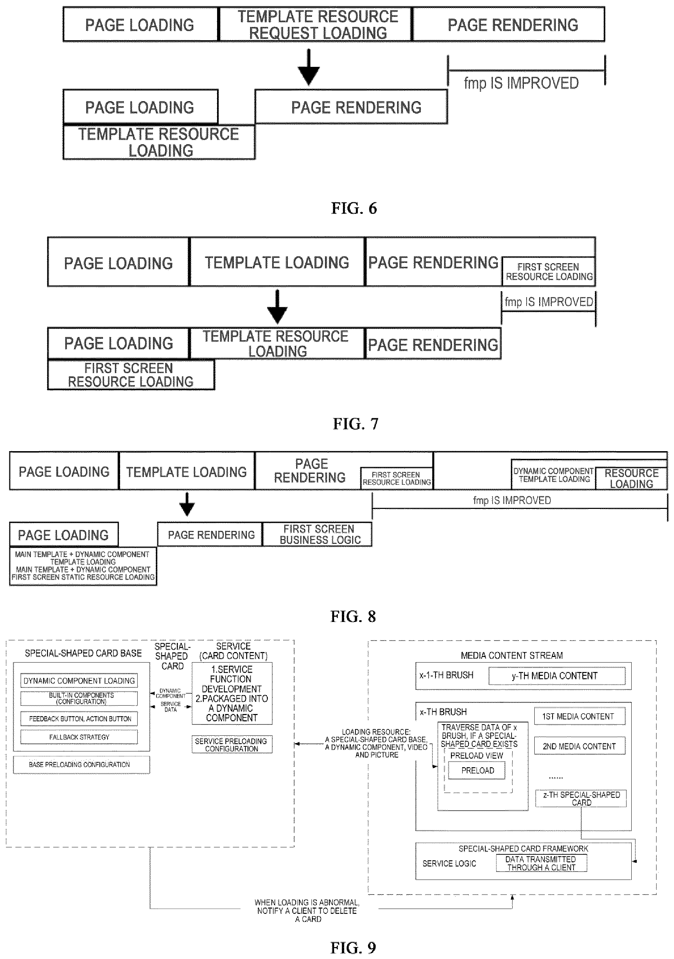

FIG. 6 is a schematic diagram of loading of a template resource provided by an embodiment of the present disclosure. The template resource in FIG. 6 may be a common resource. After a page in the related technology is loaded, template resource request loading is performed, and then page rendering is performed. The present disclosure prioritizes the template resource loading opportunity, for example, it may be prioritized to the page loading time. The page rendering is performed after the template resource is loaded, so as to improve the time when primary content of the page is displayed on a screen (First Meaningful Paint, fmp).

FIG. 7 is a schematic diagram of loading a picture resource provided by an embodiment of the present disclosure. The first-screen resource may include a picture resource in a media resource to be loaded. In the related art, template loading is performed after page loading, and then page rendering is performed. The loading of the first-screen resource is performed during the process of the page rendering. The present disclosure advances the loading opportunity for the first-screen resource, for example, it may be prioritized to the page loading opportunity. After the page is loaded, template resource loading is performed, and finally the page rendering is performed, which improves the fmp.

FIG. 8 is a schematic diagram of loading a master template and a dynamic component resource provided by an embodiment of the present disclosure. Referring to FIG. 8, after a page in the related technology is loaded, template loading is performed, and then page rendering is performed. The loading of first-screen resource is performed during the process of the page rendering. First-screen service logic is executed after the page rendering, and loading of a dynamic component template is performed in the first-screen service logic. Resource loading is performed during the process of the dynamic component template loading. The present disclosure advances a master template (i.e., a main template, which may be preset) and dynamic component template loading opportunity, and dynamic component first-screen static resource loading opportunity is prioritized, for example, to the page loading opportunity. The prioritized content in FIGS. 6 to 8 may be considered as different items to be processed in FIG. 5, which are corresponding to different loading modes. By prioritizing preloading of the first effective rendering, fmp is improved.

FIG. 9 is a flowchart of a special-shaped card display solution provided by an embodiment of the present disclosure. Referring to FIG. 9, a special-shaped card, as a front end, performs media source interaction with a client, to load a special-shaped card base, a dynamic component, a video and a picture. The special-shaped card includes the special-shaped card base and card content, where the card content is developed by a service party and packaged into the dynamic component. The interaction between service data and the dynamic component is implemented with the special-shaped card base. The special-shaped card base implements dynamic component loading, a built-in component, a feedback button (i.e., a negative feedback control), an action button (i.e., an operation control), a fallback strategy and a base preloading configuration. The special-shaped card base may also report uninteresting data to a server and playing data. The fallback strategy of the front end may notify the client to delete the card. The client may refresh a media content set to the server, such as a media content set of the *(x-1)-th* refresh and a media content set of the *x-th* refresh, and each refresh of media content set includes a plurality of media contents. The media content set of the *(x-1)-th* refresh includes the *y-th* media content. The *x-th* refresh includes a 1st media content, a 2nd media content, ..., the *z-th* special-shaped card. A framework of the special-shaped card may implement a function of transmitting data through the client.

The special-shaped card base may implement an event monitoring function. In an embodiment, a target page is displayed by means of of sliding up and down, and the background video is reloaded; the special-shaped card is returned from the secondary page of the target page, and the background video is resumed from the previous progress. For example, the following four events are defined: a first event is triggered after a gesture of swiping up and down on the media content set, to callback playing of the background video and background music; a second event is triggered when the special-shaped card is returned after opening an earphone page, to callback resuming the background video and the background music; a third event is triggered when the special-shaped card slides out of a screen and is not in a visible area, to callback pausing the background video and the background music, and the progress is cleared; a fourth event is triggered when the target page is swiped out and a switch control is to switch a page into background, to callback pausing the background video and the background music, and the progress is cleared.

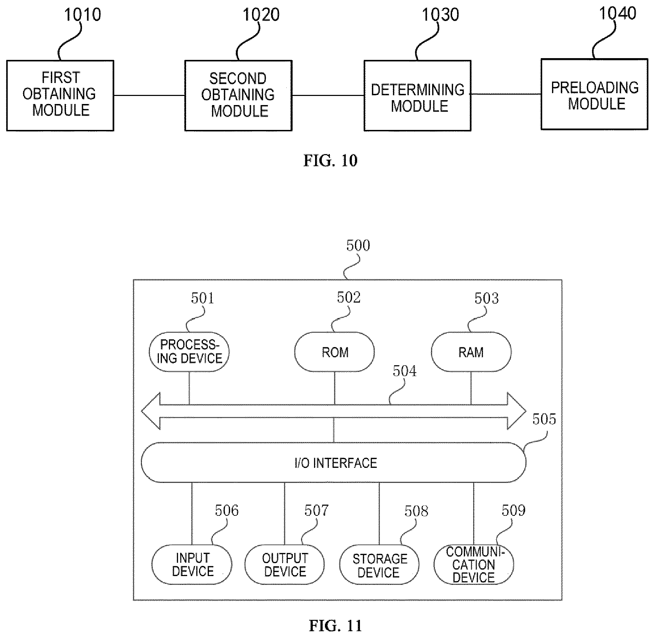

FIG. 10 is a schematic structural diagram of an apparatus for preloading a media resource provided by an embodiment of the present disclosure, as shown in FIG. 10, the apparatus comprises: a first obtaining module 1010 configured to obtain a media content set comprising a plurality of media contents; a second obtaining module 1020 configured to obtain, in response to the media content set comprising target media content and a preloading condition of the target media content being satisfied, a configuration file of the target media content, where the target media content comprises a common media resource and a media resource to be loaded; a determining module 1030 configured to determine loading information of the media resource to be loaded based on the configuration file; and a preloading module 1040 configured to preload the media resource to be loaded based on the loading information.

According to the technical solution provided by the embodiment of the present disclosure, a problem of preloading information source with non-fixed content is solved, the target media content is included in the media content set, and in response to the preloading condition of the target media content being satisfied, preloading of the media resource to be loaded is implemented through the configuration file, preloading of the information source of the non-fixed content and a preloading operation before displaying the target media content are implemented, and the page rendering performance is improved.

In an embodiment, the second obtaining module 1020 is specifically configured to: obtain, in response to the media content set comprising the target media content and the preloading condition of the target media content being satisfied, identification information corresponding to the target media content; determine whether there is a resource package corresponding to the identification information locally; in response to there being the resource package locally, determine a configuration file in the resource package as a configuration file of the target media content; in response to there being no resource package locally, preload a configuration file corresponding to the identification information.

In an embodiment, the loading information comprises a preloading mode and resource link data, and the determining module 1030 is specifically configured to: traverse an item to be processed in the configuration file, and determine a preloading path and a preloading mode corresponding to the item to be processed; and determine resource link data corresponding to the preloading path.

In an embodiment, the apparatus further includes a creating module configured to pre-create, in response to the media content set comprising the target media content and the preloading condition of the target media content being satisfied, a view of the target media content through a local service layer, where the view is configured to visualize the target media content.

In an embodiment, the apparatus further includes a display module configured to: after preloading the media resource to be loaded based on the loading information, display a target page comprising the target media content; receive an operation event for the target media content through a container layer; and respond to the operation event.

In an embodiment, the common media resource comprises a negative feedback control, and the operation event comprises a click event of the negative feedback control.

In an embodiment, the display module is specifically configured to: receive an operation event for a negative feedback control and/or an operation control in the target media content through the container layer, where a redirect address, a display style, and a display state corresponding to the operation control are custom items of the operation control.

In an embodiment, the apparatus further includes a deleting module configured to: after preloading the media resource to be loaded based on the loading information, in response to a failure in loading a preset media resource in the media resource to be loaded, delete the target media content from the media content set; and in response to a success in loading the preset media resource, trigger a loading success event of the media resource to be loaded.

In an embodiment, the apparatus further includes a preview module configured to: scan a preview pattern that is generated by a server based on a media resource associated with the target media content; and preview the target media content.

The apparatus for preloading a media resource provided by the embodiment of the present disclosure may implement the method for preloading a media resource provided by any embodiment of the present disclosure, and has functional modules and beneficial effects corresponding to the method.

It should be noted that the units and modules included in the above apparatus are only divided according to function logic, but are not limited to the above division, as long as the corresponding functions can be implemented; in addition, specific names of functional units are merely for ease of distinguishing, and are not intended to limit the protection scope of embodiments of the present disclosure.

FIG. 11 is a schematic structural diagram of an electronic device provided by an embodiment of the present disclosure. FIG. 11 is a schematic structural diagram of an electronic device (such as a terminal device or server in FIG. 11) 500 suitable for implementing embodiments of the present disclosure.

The electronic device 500 includes: one or more processing devices 501; a storage device 508 configured to store one or more programs that, when executed by the one or more processing devices 501, cause the one or more processing devices 501 to implement the method provided by the present disclosure.

The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), and a fixed terminal such as a digital TV, a desktop computer, or the like. The electronic device shown in FIG. 11 is merely an example, and should not impose any limitation on functions and scope of use of embodiments of the present disclosure.

As shown in FIG. 11, the electronic device 500 may include the processing device (for example, a central processing unit, a graphics processor, etc.) 501, which may perform various appropriate actions and processing according to a program stored in a read-only memory (ROM) 502 or a program loaded into a random access memory (RAM) 503 from the storage device 508. In the RAM 503, various programs and data required by the operation of the electronic device 500 are also stored. The processing device 501, the ROM 502, and the RAM 503 are connected to each other via a bus 504. An input/output (I/O) interface 505 is also connected to the bus 504.

Generally, the following devices may be connected to the I/O interface 505: an input device 506 including, for example, a touch screen, a touchpad, a keyboard, a mouse, a camera, a microphone, an accelerometer, a gyroscope, etc.; an output device 507 including, for example, a liquid crystal display (LCD), a speaker, a vibrator, etc.; the storage device 508 including, for example, a magnetic tape, a hard disk, etc. ; and a communication device 509. The communication device 509 may allow the electronic device 500 to communicate wirelessly or in wired connection with other devices to exchange data. Although FIG. 11 shows the electronic device 500 having various devices, it should be understood that it is not required to implement or have all the illustrated devices. More or fewer devices may alternatively be implemented or provided.

In particular, according to embodiments of the present disclosure, the process described above with reference to the flowchart may be implemented as a computer software program. For example, the embodiments of the present disclosure include a computer program product comprising a computer program embodied on a non-transitory computer readable medium, the computer program comprising program code for performing the method shown in the flowchart. In such embodiments, the computer program may be downloaded and installed from network through the communication device 509, or installed from the storage device 508, or from the ROM 502. When the computer program is executed by the processing device 501, the above functions defined in the method of embodiments of the present disclosure are performed.

Names of messages or information exchanged between multiple devices in the embodiments of the present disclosure are for illustrative purposes only and are not intended to limit a scope of such messages or information.

The electronic device provided by the embodiments of the present disclosure and the method for preloading a media resource provided by the above embodiments belong to the same inventive concept, technical details not described in detail in these embodiments may refer to the above embodiments, and these embodiments have the same beneficial effects as the above embodiments.

An embodiment of the present disclosure provides a computer storage medium, where a computer program is stored, and when the program is executed by a processor, the method for preloading a media resource provided in the above embodiments is implemented.

It should be noted that the computer-readable medium described above may be a computer readable signal medium, a computer readable storage medium, or any combination of the above two.

The computer storage medium may be a storage medium of computer executable instructions that, when executed by the computer processor, are configured to perform the methods provided by the present disclosure.

The computer-readable storage medium may be, for example, but not limited to, an electrical, magnetic, optical, electromagnetic, infrared, or semiconductor system, apparatus, or component, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that may be used by or in connection with an instruction execution system, apparatus, or component. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the above. The computer readable signal medium may also be any computer readable medium other than a computer readable storage medium that may send, propagate, or transmit a program for use by or in connection with an instruction execution system, apparatus, or component. The program code embodied on the computer-readable medium may be transmitted with any suitable medium, including, but not limited to: wires, optical cables, RF (radio frequency), and the like, or any suitable combination of the above.

In some implementations, a client and a server may communicate using any currently known or future developed network protocol, such as HTTP (HyperText Transfer Protocol), and may be interconnected with any form or medium of digital data communication (e.g., a communication network). Examples of communication networks include local area networks ("LANs"), wide area networks ("WANs"), internets (e.g., the Internet), and end-to-end networks (e.g., ad hoc end-to-end networks), as well as any currently known or future developed networks.

The computer-readable medium described above may be included in the electronic device; or may be separately present without being assembled into the electronic device.

The computer readable medium carries one or more programs, and when the one or more programs are executed by the electronic device, the electronic device is caused to: obtain a media content set comprising a plurality of media contents; obtain, in response to the media content set comprising target media content and a preloading condition of the target media content being satisfied, a configuration file of the target media content, where the target media content comprises a common media resource and a media resource to be loaded; determine loading information of the media resource to be loaded based on the configuration file; and preload the media resource to be loaded based on the loading information.

Computer program code for performing operations of the present disclosure may be written in one or more programming languages, including, but not limited to, object oriented programming languages, such as Java, Smalltalk, C + +, and conventional procedural programming languages, such as "C" languages or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the drawings illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing specified logical function. It should also be noted that in some alternative implementations, functions noted in blocks may also occur in a different order than that illustrated in the drawings. For example, two consecutively represented blocks may actually be performed substantially in parallel, which may sometimes be performed in a reverse order, depending on the functionality involved. It is also noted that each block in block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The modules or units involved in embodiments of the present disclosure may be implemented in software, or may be implemented in hardware. For example, the first obtaining module may be further described as a "media content set obtaining module".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the above. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the above.

According to one or more embodiments of the present disclosure, [example 1] provides a method for preloading a media resource, including: obtaining a media content set comprising a plurality of media contents; obtaining, in response to the media content set comprising target media content and a preloading condition of the target media content being satisfied, a configuration file of the target media content, where the target media content comprises a common media resource and a media resource to be loaded; determining loading information of the media resource to be loaded based on the configuration file; and preloading the media resource to be loaded based on the loading information.

According to one or more embodiments of the present disclosure, [example 2] provides the method of example 1, where obtaining, in response to the media content set comprising the target media content and the preloading condition of the target media content being satisfied, the configuration file of the target media content comprises: obtaining, in response to the media content set comprising the target media content and the preloading condition of the target media content being satisfied, identification information corresponding to the target media content; determining whether there is a resource package corresponding to the identification information locally; in response to there being the resource package locally, determining a configuration file in the resource package as the configuration file of the target media content; in response to there being no resource package locally, preloading the configuration file corresponding to the identification information.

According to one or more embodiments of the present disclosure, [example 3] provides the method of example 1, where the loading information comprises a preloading mode and resource link data, and determining the loading information of the media resource to be loaded based on the configuration file comprises: traversing items to be processed in the configuration file, to determine a preloading path and a preloading mode corresponding to the items to be processed; and determining the resource link data corresponding to the preloading path.

According to one or more embodiments of the present disclosure, [example 4] provides the method of example 1, where in response to the media content set comprising the target media content and the preloading condition of the target media content being satisfied, the method further comprises: pre-creating a view of the target media content through a local service layer, wherein the view is configured to visualize the target media content.

According to one or more embodiments of the present disclosure, [example 4] provides the method of example 1, and after the preloading the media resource to be loaded based on the loading information, the method further comprises: displaying a target page comprising the target media content; receiving an operation event for the target media content through a container layer; and responding to the operation event.

According to one or more embodiments of the present disclosure, [example 6] provides the method of example 5, where the common media resource comprises a negative feedback control, and the operation event comprises a click event of the negative feedback control.

According to one or more embodiments of the present disclosure, [example 7] provides the method according to example 5, receiving the operation event for the target media content through the container layer comprises: receiving an operation event for a negative feedback control and/or an operation control in the target media content through the container layer, where a redirect address, a display style, and a display state corresponding to the operation control are custom items of the operation control.

According to one or more embodiments of the present disclosure, [example 8] provides the method of example 1, and after the preloading the media resource to be loaded based on the loading information, the method further comprises: in response to a failure in loading a preset media resource in the media resource to be loaded, deleting the target media content from the media content set; and in response to a success in loading the preset media resource, triggering a loading success event of the media resource to be loaded.

According to one or more embodiments of the present disclosure, [example 9] provides the method of example 1, the method further comprises: scanning a preview pattern that is generated by a server based on a media resource associated with the target media content; and previewing the target media content.

According to one or more embodiments of the present disclosure, [example 10] provides an apparatus for preloading a media resource , comprising: a first obtaining module configured to obtain a media content set comprising a plurality of media contents; a second obtaining module configured to obtain, in response to the media content set comprising target media content and a preloading condition of the target media content being satisfied, a configuration file of the target media content, where the target media content comprises a common media resource and a media resource to be loaded; a determining module configured to determine loading information of the media resource to be loaded based on the configuration file; and a preloading module configured to preload the media resource to be loaded based on the loading information.

According to one or more embodiments of the present disclosure, [example 11] provides an electronic device, comprising: one or more processing devices; a storage device configured to store one or more programs, where the one or more programs, when executed by the one or more processing devices, causing the one or more processing devices to implement the method for preloading a media resource according to any of examples 1 to 9.

According to one or more embodiments of the present disclosure, [example 12] provides a storage medium comprising computer-executable instructions, where the computer-executable instructions, when executed by a computer processor, are configured to perform the method for preloading a media resource according to any of examples 1 to 9.

According to the embodiment of the present disclosure, the media content set comprising the plurality of media contents is obtained; in response to the media content set comprising the target media content and the preloading condition of the target media content being satisfied, the configuration file of the target media content is obtained, where the target media content comprises the common media resource and the media resource to be loaded; the loading information of the media resource to be loaded is determined based on the configuration file; the media resource to be loaded is preloaded based on the loading information, a preloading problem of information source with non-fixed content is solved, the target media content is included in the media content set, the preloading condition of the target media content being satisfied, preloading of the media resource to be loaded is implemented through the configuration file, preloading of the information source with the non-fixed content is implemented, a preloading operation before displaying the target media content, and rendering performance of a page is improved.

The above description is merely an illustration of preferred embodiments of the present disclosure and the principles of applied technology. It should be understood by those skilled in the art that disclosure in the present disclosure is not limited to technical schemes of a specific combination of the above technical features, and should also cover other technical schemes formed by any combination of the above technical features or their equivalent features without departing from the above disclosed concept. For example, a technical solution formed by mutually replacing the above features with (but not limited to) technical features having similar functions disclosed in the present disclosure.

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for preloading a media resource, comprising:
obtaining a media content set comprising a plurality of media contents;
obtaining, in response to the media content set comprising target media content and a preloading condition of the target media content being satisfied, a configuration file of the target media content, wherein the target media content comprises a common media resource and a media resource to be loaded;
determining loading information of the media resource to be loaded based on the configuration file;
preloading the media resource to be loaded based on the loading information.

2. The method according to claim 1, wherein obtaining, in response to the media content set comprising the target media content and the preloading condition of the target media content being satisfied, the configuration file of the target media content comprises:
obtaining, in response to the media content set comprising the target media content and the preloading condition of the target media content being satisfied, identification information corresponding to the target media content;
determining whether there is a resource package corresponding to the identification information locally;
in response to there being the resource package locally, determining a configuration file in the resource package as the configuration file of the target media content; in response to there being no resource package locally, preloading a configuration file corresponding to the identification information.

3. The method according to claim 1, wherein the loading information comprises a preloading mode and resource linking data, and determining the loading information of the media resource to be loaded based on the configuration file comprises:
traversing items to be processed in the configuration file, to determine a preloading path and a preloading mode corresponding to the items to be processed;
determining resource link data corresponding to the preloading path.

4. The method according to claim 1, wherein in response to the media content set comprising the target media content and the preloading condition of the target media content being satisfied, further comprising:
pre-creating a view of the target media content through a local service layer, the view being configured to visualize the target media content.

5. The method according to claim 1, wherein after preloading the media resource to be loaded based on the loading information, further comprising:
displaying a target page comprising the target media content;
receiving an operation event for the target media content through a container layer;
responding to the operation event.

6. The method according to claim 5, wherein the common media resource comprises a negative feedback control, and the operation event comprises a click event of the negative feedback control.

7. The method according to claim 5, wherein receiving the operation event for the target media content through the container layer comprises:
receiving an operation event for a negative feedback control and/or an operation control in the target media content through the container layer, wherein a redirect address, a display style, and a display state corresponding to the operation control are custom items of the operation control.

8. The method according to claim 1, wherein after preloading the media resource to be loaded based on the loading information, further comprising:
in response to a failure in loading a preset media resource in the media resource to be loaded, deleting the target media content from the media content set;
in response to a success in loading the preset media resource, triggering a loading success event of the media resource to be loaded.

9. The method according to claim 1, further comprising:
scanning a preview pattern that is generated by a server based on a media resource associated with the target media content;
previewing the target media content.

10. An apparatus for preloading a media resource, comprising:
a first obtaining module configured to obtain a media content set comprising a plurality of media contents;
a second obtaining module configured to obtain, in response to the media content set comprising target media content and a preloading condition of the target media content being satisfied, a configuration file of the target media content, wherein the target media content comprises a common media resource and a media resource to be loaded;
a determining module configured to determine loading information of the media resource to be loaded based on the configuration file;
a preloading module configured to preload the media resource to be loaded based on the loading information.

11. An electronic device, comprising:
one or more processing devices;
a storage device configured to store one or more programs;
wherein the one or more programs, when executed by the one or more processing devices, causing the one or more processing devices to implement the method for preloading a media resource according to any of claims 1 to 9.

12. A storage medium comprising computer-executable instructions, wherein the computer-executable instructions, when executed by a computer processor, are configured to perform the method for preloading a media resource according to any of claims 1 to 9.
